# EUROPEAN PATENT APPLICATION

(11) **EP 1 098 521 A1**
(43) Date of publication of application: **09.05.2001**
(21) Application number: 00402955.9
(22) Date of filing: 25.10.2000
(51) Int. Cl.: H04N 7/088

(54) **Process for allocating bandwidth to data streams in a broadcasting network**

(30) Priority: 05.11.1999 FR 9913890
(71) Applicant: THOMSON multimedia, 92100 Boulogne Billancourt (FR)
(72) Inventor: Lesenne, Laurent, Thomson Multimedia, 92100 Boulogne-Billancourt (FR); Morillon, Gilles, Thomson Multimedia, 92100 Boulogne-Billancourt (FR); Patry, Nadine, Thomson Multimedia, 92100 Boulogne-Billancourt (FR)
(74) Representative: Ruellan-Lemonnier, Brigitte

(57) **Abstract**

The invention relates to a process for allocating bandwidth to a plurality of data streams on a communication channel of a broadcasting network. The bandwidth of each stream transmitted from a communication office is defined by an effective allocation value.

This value depends on a predefined allocation value and is recalculated when the transmission of another stream is modified. The effective allocation value for each stream is calculated as a function of strategies and can be adjusted as a function of the actual transmission of the data on the communication channel.

The subject of the invention is also the communication office which allocates the bandwidths of each stream according to the process.

## Description

The present invention lies in the field of analogue television. A communications office transmits audio/video signals on a broadcasting network, these signals being sent either over the airwaves, or by satellite or else by cable. A picture displayed on the screen of the television consists of two interlaced frames. The audio/video signals are divided temporally into lines. The content of these lines controls the transmission of the light spot during horizontal scans of the screen. Some lines do not transmit picture information: these are the "black lines". They are despatched during the VBI interval, referred to as the VBI ("Vertical Blanking Interval"). This interval enables the television to move the light spot from the bottom right corner of the screen to the top left corner. This time is exploited by the communication office to transmit data relating to services complementary to the audio/video signals (teletext, subtitles, for example). The VBI thus constitutes a veritable communication channel independent of the audio visual signals intended for display. These complementary services allow the user to be better informed of the possibilities which television offers him and to access them easily. It is also pcssible via this channel to transmit applications which are executed on a receiver. Furnished with such services, so-called interactive television allows genuine dialogue with the user thereof.

The signals transmitted during the VBI are decoded by receivers/decoders, or more simply decoders. These decoders can be independent apparatuses. For the present invention, it is preferable to integrate them into the television, thereby making it possible to use certain modules which are already present, such as the tuner. The decoders extract digital data packets from the audio/video signal. By concatenating the packets, the decoders reconstruct in the memory the complete services such as, for example, interactive services. A service may be a code executable by the decoder, screen pages, an electronic programme guide, etc. Once the service is in the decoder, it can be processed at the user's request. During transmission, the data are despatched in a stream. A stream is characterized by the cyclic transmission of a data block for a certain time. If several streams are transmitted at the same time, they are multiplexed on the broadcasting channel. A decoder, whether or not it is integrated into the television, typically comprises a central processor unit which, through internal communication busses, is linked to a read-only program memory (ROM), a backed-up non-volatile programmable memory of EEPROM, FLASH or RAM type and input/output interfaces such as circuits for detecting and for demodulating the digital data packets. Upon power-up and in general, the central processor unit firstly executes a bootstrap program situated in the read-only memory followed by a program intended for managing the interactions with the user. This second program consists of software executable by the central processor unit and of data such as screen pages.

The bit rate of the digital data transmitted during the VBI is relatively low, a few kilobits per second. This bit rate is fixed since it comprises all or a determined part of the VBI lines. If the communication office has to transfer a sizeable quantity of data, the waiting time for broadcasting the digital data increases. Some uses might not obtain the specific data for which they are waiting quickly enough. To avoid this, the communications office can request the allocation of several additional VBI lines. However, this is not always possible in terms of hardware and in any event there is a physical limitation to the bit rate.

The subject of the present invention is a process for allocating bandwidth to a plurality of data streams, the said streams being broadcast on a communication channel from a communication office, comprising the following steps executed by the communication office:
- a) formulating predefined values of bandwidth allocation for the said plurality of streams,
- b) determining effective values of bandwidth allocation for each stream,
- c) transmitting the streams over the communication channel according to the effective allocation values, Characterised in that the data in the streams are relating to complementary services of audio visual programmes, the total of effective values of bandwidth allocation is equal to the entire bandwidth of the communication channel, and that the steps b) and c) are repeated following the modifying of the state of a stream.

With the aid of the present invention, the communication office can allocate a part of the bandwidth of the communication channel to each stream. Thus, the office calculates an effective allocation value from an allocation value which is predefined, for example via an operator. The invention thus exhibits the advantage of dynamically and optimally distributing the transmission of data streams from a communications office.

According to one improvement, the effective value for a stream cannot be below the predefined allocation value. According to another improvement, the effective allocation values cannot exceed a predetermined maximum value.

According to other improvements, when a stream halts, the bandwidth thus freed is either allocated to one other stream, or is allocated equitably to all the other streams. According to another improvement, the bandwidth of a stream which starts is recovered in the bandwidth of the streams whose effective values have exceeded their programmed allocation values.

According to another improvement, the process takes into account priority indicators which are set for each stream.

According to another improvement, the process comprises a step of transmitting the streams by multiplexing data packets of each of the streams on the communicating channel, and a step of calculating an actual allocation value calculated for each stream by taking into account the number of packets of each stream transmitted on the communication channel during a determined time period. The invention is thus particularly advantageous since it takes into account the packetwise transmission of the streams whilst allowing accurate management of the allocation values of each stream. According to one improvement, the effective allocation value for each stream is calculated during a time window.

The subject of the present invention is also the communications office for implementing the process according to Claim 1, furnished with a central processor unit, a memory containing predefined allocation values for each stream and devices for transmitting a plurality or data streams over a communication channel of a broadcasting network, means of calculating effective allocation values corresponding to each stream on the basis of the predefined allocation values for the relevant stream and the effective allocation values for the other streams characterised in that the data in the streams are relating to complementary services of audio visual programmes, the total of effective values of bandwidth allocation is equal to the entire bandwidth of the communication channel, and that the means of calculating effective allocation values are at least activated at each time a stream stops or launches again. Other characteristics and advantages will become apparent through the description of a non-limiting exemplary embodiment illustrated by the following figures:
Figure 1 depicts the elements of a network fcr broadcasting televised pictures.
Figure 2 depicts the internal architecture of the communications office.

The present invention lies within the context of interactive television, based on analogue video transmission comprising digital data modulated on certain video lines. However, the present invention is not limited solely to this context;

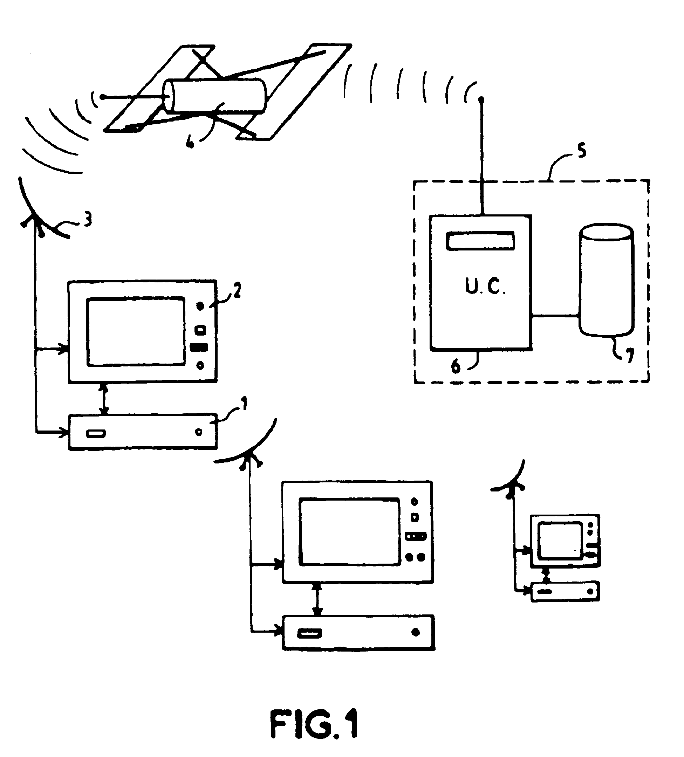

The diagram of Figure 1 shows the elements of a broadcasting network implementing the invention. The decoder (1) picks up video signals with the aid of an antenna (3), for example a parabolic antenna. These video signals, originating from a satellite (4) or from radio relays or from a cable or from any other means of communication whose bit rate is high enough, are also received by the television (2). The transmissions are created by a communications office (5) furnished with a central processor unit (6) and with a memory (7). The transmissions comprise analogue signals corresponding to pictures and digital data transmitted during the VBI. The central processor unit (6) comprises circuits processing the data from the memory so as to shape them before inserting them into the video signal to be transmitted. The insertion of digital data into the VBI interval is a technique which is itself well known to the person skilled in the art.

Let us assume for example that the communication office allocates two lines of the VBI per frame to the transmission of digital data. The communication channel thus defined has a bandwidth of 24 kilobits per second. According to the present example, the communication office can despatch the following four types of data through this channel:
- an interactive service such as a game, or some other application,
- a software update for the decoders,
- system information such as the time, the date, etc.
- data from the service provider, such as the electronic programme guide (EPG).

These data are transmitted independently of one another in four streams each dedicated to one of these data types. Reception by a maximum number of decoders is ensured with repetitive transmissions of the data. This is why, when a block is transmitted, it is also transmitted some time afterwards, according to the turntable technique. If the total bandwidth of the transmission of the digital data is for example 19 200 bits per second, it is possible to define a particular distribution among the various streams. Table 1 below shows examples of allocation values for distributing the four streams.

**TABLE 1**

| Type of data stream | Allocation (%) | Bit rate |
|---|---|---|
| Interactive service | 50% | 9 600 |
| Software update | 30% | 5 760 |
| System information | 5% | 960 |
| Data (electronic programme guide. | 15% | 2 880 |

In the example of Table 1, the transpcrt stream for the interactive services has the highest priority (50%), and that for the system information has the lowest priority (5%). The allocation values are programmed manually as a percentage by an operator at the communications office, and they can be modified at any moment. The total bandwidth allocated by the office can change, and this is why it is more advantageous to introduce relative percentage values rather than precise values of bit rate. A configuration screen shows the type of stream and the corresponding programmed allocation values.

The operator thus determines the quantity of data to be transmitted in each stream. This quantity can be expressed in the form of a certain number of transmissions of the same data block which is located in a memory. It may also be defined in the form of a time slot during which the data block is transmitted. When this quantity has been despatched, the stream no longer has anything to transmit, and hence this resource thus freed can be used for the other streams. This carryover is controlled according to several allocation strategies which will be detailed below.

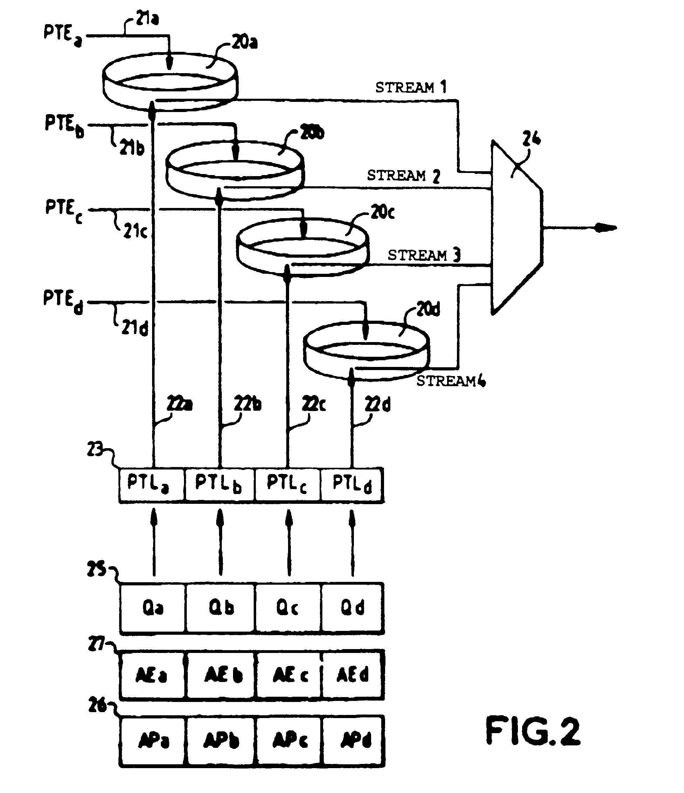

Figure 2 shows the organisation of the memory of the communication office so as to implement the allocation mechanism when a stream is suspended.

The data to be transmitted are stored in stream memories (20a, 20b, 20c, 20d) corresponding to each data type. Stream 1 transmits the data of memory 20a, stream 2, of memory 20b, etc. Writing to each memory is carried out with the aid of write pointers PTEa (21a), PTEb (21b), PTEc (21c), PTEd (21d). Writing to the stream memories is performed under the supervision of the communication office. Reading of each stream memory is carried out with the aid of read pointers PTLa (22a), PTLb (22b), PTLc (22c), PTLd (22d). These memories have a circular structure. When the value of a pcinter exceeds the maximum address of the memory, it is initialised to the minimum address. The values of the read pointers are grouped together in a register (23). The data read by the pointers are despatched to a multiplexer (24) which despatches them to the broadcasting network. The central processor unit activates the read pointers as a function of the effective allocation values stored in the register (27). If all the streams are active, the effective allocation values are equal to those programmed initially by the operator. The values APa, APb, APc, APd corresponding to each stream are stored in the register (26). Let us reconsider the values of Table 1 and let us suppose that stream 1 corresponds to the interactive service, stream 2 to the software updates, etc. If 100 bytes are transmitted by the multiplexer, the central processor unit activates the pointer PTLa 50 times, this having made it possible to read 50 bytes, the pointer PTLb 30 times, this having made it possible to read 30 bytes, and so on and so forth.

Each memory possesses a start address ADR-STAa, ADR-STAb, ADR-STAc, ADR-STAd, it being from these addresses that the write pointers begin to write the data. A second register (24) contains the quantity of data to be transmitted, it consists of words Qa, Qb, Qc, Qd corresponding to each stream memory. This quantity is expressed as a number of bytes. For example, the memory 20a contains 1 000 bytes. The operator decides to allocate the transmission of 10 000 bytes to stream 1. The central processor unit at the communication office initialises the pointer PTLa with the value of ADR-STAa, and the register Qa to "10 000". Each time PTLa reads a byte, the register Qa is decremented by one unit. When the value of Qa reaches "0", no more data is despatched, stream 1 is suspended.

Another way of expressing the quantity of data to be transmitted by the stream 1 is to define a transmission slot. For example, the memory 20a still contains 1 000 bytes. The operator decides to allocate stream 1 the slot from 1800 hours to 2300 hours. As long as the start time has not been reached, stream 1 is suspended. Between 1800 hours and 2300 hours, stream 1 is active and despatches data according to the effective allocation value in the allocation register (26). Immediately after 2300 hours, the central processor unit zeroes the contents of the register Qa, no more data is despatched, stream 1 is suspended. When a stream is suspended, a "gap" occurs in the transmission of the data by the multiplexer (24). This is why the present invention makes provision to allocate the resource thus freed to one or more streams which are still active. The central processor unit calculates new allocation values AEa, AEb, AEc, AEd and stores them in the register (27).

As may be seen in the exemplary embodiment, the central processor unit takes into account two new parameters for each data stream: the active/suspended state and the effective allocation of the stream. The state of a stream is active when the stream contains data to be transmitted. It is suspended when no data is transmitted.

If, by the nature of the data transmitted, streams cannot come to a halt, one can avoid furnishing the corresponding stream memories with test devices. In this case, the value of the state of the corresponding stream is fixed permanently at "active".

The value of the effective allocation depends on the allocation defined by the operator and on the state of the stream. A first strategy consists in granting all the resource thus freed to the stream with the largest value. Table 2 shows the programmed allocation values held in the register 26 and the effective allocation values held in the register 27, these values being calculated from the values shown in Table 1, when the "Software update" stream is suspended.

**TABLE 2**

| Type of data stream | State of the stream | Programmed allocation | Effective allocation | Bit rate |
|---|---|---|---|---|
| Interactive service | Active | 50% | 80% | 15 360 |
| Software update | Suspended | 30% | 0 | 0 |
| System information | Active | 5% | 5% | 960 |
| Data (E.P.G.) | Active | 15% | 15% | 2 880 |

In a manner which is symmetric to the decreasing or discontinuing of a stream, the increasing or the reactivating of a stream consists in increasing its effective allocation value by automatically tapping off some bandwidth to the detriment of one of more other streams. The bandwidth is recovered preferably in the streams whose effective value is greater than the programmed value. In the example cited previously, when the stream entitled "Software update" is transmitted again, the effective values of the four streams will again become equal to the programmed values, that is to say equal to the values before the "Software update" stream comes to a halt.

It is also possible to define another allocation strategy during a stream halt: the resource thus freed is distributed equitably over the remaining streams. As a function of this strategy, Table 3 shows the effective allocation values calculated from the values shown in Table 1, when the "Software update" stream is suspended. The 30% of the "Software update" stream has been distributed (10% each) among the other three streams.

**TABLE 3**

| Type of data stream | State of the stream | Programmed allocation | Effective allocation | Bit rate |
|---|---|---|---|---|
| Interactive service | Active | 50% | 60% | 11 520 |
| Software update | Suspended | 30% | 0 | 0 |
| System information | Active | 5% | 15% | 2 880 |
| Data (E.P.G.) | Active | 15% | 25% | 4 800 |

Another strategy consists in defining a minimum value and/or a maximum value for the effective allocation of each stream. For example, the allocation may not fall below 20% or exceed 50%. The resources thus released are distributed equitably among the other streams. As a function of this strategy, Table 4 shows the effective allocation values calculated from the values shown in Table 1, when the "Software update" stream is suspended:

**TABLE 4**

| Type of data stream | State of the stream | Programmed allocation | Effective allocation | Bit rate |
|---|---|---|---|---|
| Interactive service | Active | 50% | 50% | 9 600 |
| Software update | Suspended | 30% | 0 | 0 |
| System information | Active | 5% | 20% | 3 840 |
| Data (E.P.G.) | Active | 15% | 30% | 5 760 |

If just one stream remains, then the office ignores the maximum value and allocates the value 100% to this stream.

If zero allocation values are programmed, then the data corresponding to these streams are transmitted only when resources become free. This occurs either when the total of the programmed allocation values does not reach 100%, or when a stream whose programmed allocation value is not zero is halted.

Table 5 below shows the effective allocation values for three streams at two different moments in time. Starting from the second moment, stream 3 is halted.

**TABLE 5**

| Data stream | Programmed allocation | Moment 1 | | Moment 2 | |
|---|---|---|---|---|---|
| | | State of the stream | Effective allocation | State of the stream | Effective allocation |
| Stream 1 | 0% | Active | 0% | Active | 25% |
| Stream 2 | 75% | Active | 75% | Active | 75% |
| Stream 3 | 25% | Active | 25% | Suspended | 0% |

Another strategy consists in defining priorities for each of the streams. A priority indicator represented by a memory cell in the memory of the communications office is updated by the operator. The principle of this strategy consists in a non-priority stream being transmitted only if a priority stream has come to a halt. If the streams all have the same priority, the resource freed is shared out equitably among the other streams.

Table 6 below shows the effective allocation values for three streams at two different moments in time. The priority indicator of the first stream is set, this stream has priority (indicated in bold typeface in Table 6). Starting from the second moment, stream 3 is halted.

**TABLE 6**

| Data stream | Programmed allocation | Moment 1 | | Moment 2 | |
|---|---|---|---|---|---|
| | | State of the stream | Effective allocation | State of the stream | Effective allocation |
| **Stream 1** | **50%** | **Active** | **50%** | **Active** | **75%** |
| Stream 2 | 25% | Active | 25% | Active | 25% |
| Stream 3 | 25% | Active | 25% | Suspended | 0% |

If the operator grants priority to a stream by programming a zero allocation value for it, then this stream is broadcast only if a resource is freed.

Table 7 below shows the effective allocation values for three streams at two different moments in time. The first stream has priority (bold), its programmed allocation is zero. Starting from the second moment, stream 2 is halted.

**TABLE 7**

| Data stream | Programmed allocation | Moment 1 | | Moment 2 | |
|---|---|---|---|---|---|
| | | State of the stream | Effective allocation | State of the stream | Effective allocation |
| **Stream 1** | **0%** | **Active** | **0%** | **Active** | **75%** |
| Stream 2 | 75% | Active | 75% | Suspended | 0% |
| Stream 3 | 25% | Active | 25% | Active | 25% |

When a stream becomes active again, the simplest method consists in again giving it the same allocation value as at the moment in time when it came to a halt. Other methods may be envisaged.

The priority indicator can take various values thus defining a hierarchy between the various streams. In this case, this indicator occupies a byte. With five priority levels, the value of thisindicator may be 0, 1, 2, 3 or 4.

In a network for broadcasting televised pictures, the digital data are transmitted in packets. In their header, these packets possess an identifier so that a receiver can determine to which streams they belong. If one observes the type of data transmitted in the course of a succession of sliding time windows whose the durations are equal to one second, for example, a certain number of packets are transmitted. Let us take an example: 12 packets are transmitted belonging to three streams: S1, S2 and S3. The chronological configuration of the 12 packets is as follows: [S1]-[S2]-[S1]-[S3]--[S1]-[S2]-[S1]-[S2]-[S1]-[S3]-[S1]-[S2]

Table 3 shows the programmed allocations and the ratios: number of packets transmitted for a stream/total number of streams. This ratio expresses what has actually been transmitted for each stream. A discrepancy is noted between the effective allocation, this being the instruction from the office, and a so-called "actual" allocation which is measured in the course of a sliding time window.

**TABLE 8**

| Data stream | Programmed allocation | Window 1 | | |
|---|---|---|---|---|
| | | Number of packets | Actual allocation | Discrepancy |
| Stream 1 | 50% | 6 | 50% | 0% |
| Stream 2 | 30% | 4 | 33% | +3% |
| Stream 3 | 20% | 2 | 17% | -3% |

The discontinuity in the values of the ratio (in the example: 1/12, 2/12, ... 11/12) entails a discrepancy between the actual allocation and the effective allocation, this discrepancy having to be corrected during the succeeding time window(s).

To carry out this function and according to an improvement of the present invention the actual allocation values are recalculated with each transmission of a stream and compared with the effective allocation values. The communication office chooses to transmit the stream whose discrepancy is negative and of highest absolute value. Once transmitted, the discrepancy of this stream will have been reduced and another stream will very probably be chosen to be transmitted during the next window.

As a variant, the sliding time windows do not overlap. No calculation is performed over the duration of the window but all the calculations are grouped together at the end. Firstly, the actual allocation values of each stream are determined, then the discrepancies and finally temporary adjustment values which will modify the effective allocation values during the next window. These adjustments are valid only for the next window. In a simple way, the adjustments have the same value as the discrepancies in absolute value but with the opposite sign. For example, if the discrepancy is -2%, the effective value is temporarily enhanced by +2%, the discrepancy is +1%, the effective value is temporarily decreased by 1%. Care will be taken to define a wide enough window so as to reduce the value of the discrepancies and avoid repeating the calculations too often. A window with a duration of one second gives good results, this corresponding to the transmission of some forty packets on average.

Table 8 below shows the way in which the transmission of three streams evolves in the course of five consecutive windows. 41 packets have been transmitted during window 1, 43 during window 2, 40 during window 3, 42 during window 4, 39 during window 5. In the course of these five windows, 205 packets have been transmitted : 103 for stream 1, this corresponding to 50.25% ; 41 for stream 2, this corresponding to 20%; 61 for stream 3, this corresponding to 29.75%. It may be seen that the actual values are very close to the programmed values.

**TABLE 8**

| Window number | Stream number | Prog. val. (%) | Effec. val. (%) | Number of packets per stream | Total number of packets | Actual val. (%) | Discrepancy |
|---|---|---|---|---|---|---|---|
| 1 | Stream 1 | 50% | 50% | 20 | 41 | 49% | -1% |
| | Stream 2 | 20% | 20% | 9 | | 22% | +2% |
| | Stream 3 | 30% | 30% | 12 | | 29% | -1% |
| 2 | Stream 1 | 50% | 51% | 22 | 43 | 51 | +1% |
| | Stream 2 | 20% | 18% | 8 | | 19 | -1% |
| | Stream 3 | 30% | 31% | 13 | | 30 | 0% |
| 3 | Stream 1 | 50% | 49% | 20 | 40 | 50% | 0% |
| | Stream 2 | 20% | 21% | 8 | | 20% | 0% |
| | Stream 3 | 30% | 30% | 12 | | 30% | 0% |
| 4 | Stream 1 | 50% | 50% | 21 | 42 | 50% | 0% |
| | Stream 2 | 20% | 20% | 8 | | 19% | -1% |
| | Stream 3 | 30% | 30% | 13 | | 21% | +1% |
| 5 | Stream 1 | 50% | 50% | 20 | 39 | 51% | +1% |
| | Stream 2 | 20% | 21% | 8 | | 21% | +1% |
| | Stream 3 | 30% | 29% | 11 | | 28% | -2% |

Quite obviously, what has just been described can be combined with all the allocation strategies previously set forth. With the aid of this improvement, by increasing the duration of the time window, the discrepancy between the actual allocation and the effective allocation is reduced, thereby allowing very accurate management of the distribution of the streams.

Of course, modifications may be made to the process and to the system for its implementation, without, however, departing from the context of the present invention, such as the former is defined by the claims.

## Claims

1. Process for allocating bandwidth to a plurality of data streams, the said streams being broadcast on a communication channel from a communication office, comprising the following steps executed by the communication office:
- a) formulating predefined values of bandwidth allocation for the said plurality of streams,
- b) determining effective values of bandwidth allocation for each stream,
- c) transmitting the streams over the communication channel according to the effective allocation values, Characterised in that the data in the streams are relating to complementary services of audio visual programmes, the total of effective values of bandwidth allocation is equal to the entire bandwidth of the communication channel, and that the steps b) and c) are repeated following the modifying of the state of a stream.

2. Process according to Claim 1, characterised in that an effective allocation value for a stream, as determined in step b), cannot lie below the predefined allocation value for this stream.

3. Process according to Claim 1 or 2, characterised in that the effective allocation values determined in step b; cannot exceed a predetermined maximum value.

4. Process according to any one of the previous claims, characterised in that the effective allocation value for a halted stream is allocated to one other stream.

5. Process according to any one of Claims 1 to 3, characterised in that the effective allocation value for a halted stream is allocated equitably to all the other streams.

6. Process according to any one of the preceding claims, characterised in that the effective allocation value for the stream which starts is recovered in the bandwidth of the streams whose effective values have exceeded their programmed allocation values.

7. Process for allocating bandwidth according to any one of the preceding claims, characterised in that a priority indicator is associated with each stream, the said indicator determining a level of priority of the corresponding stream, the streams whose priority levels are maximum benefiting as a priority from the allocation of a halted stream.

8. Process for allocating bandwidth according to any one of the preceding claims, characterised in that it furthermore comprises a step of transmitting the streams by multiplexing data packets of each of the streams on the communicating channel, and a step of calculating an actual allocation value calculated for each stream by taking into account the number of packets of each stream transmitted on the communication channel during a determined time period.

9. Process for allocating bandwidth according to Claim 8, characterised in that the effective allocation value for each stream is calculated at each determined time period by taking into account the discrepancy between the actual allocation values calculated for previous time duration and the effective allocation value.

10. Communications office for implementing the process according to Claim 1, furnished with a central processor unit, a memory containing predefined allocation values for each stream and devices for transmitting a plurality of data streams over a communication channel of a broadcasting network, means of calculating effective allocation values corresponding to each stream on the basis of the predefined allocation values for the relevant stream and the effective allocation values for the other streams characterised in that the data in the streams are relating to complementary services of audio visual programmes, the total of effective values of bandwidth allocation is equal to the entire bandwidth of the communication channel, and that the means of calculating effective allocation values are at least activated at each time a stream stops or launches again.

11. Communication office according to Claim 10, characterised in that the calculating means are at least activated each time one of the streams halts or restarts.

12. Communication office according to Claim 10 or 11, characterised in that the transmitting of the streams is performed by multiplexing data packets on the communication channel, and in that the said office calculates an actual allocation value for each stream by taking into account the number of packets of each stream transmitted on the communication channel during a determined time period.

13. Communication office according to Claim 12, characterised in that the calculating means determines at each transmission of a packet the stream whose actual value is less than its programmed allocation value and in absolute value, furthest from its programmed allocation value, the next packet to be transmitted belonging to this stream.
